(19) Europäisches Patentamt
European Patent Office
Office européen des brevets

(11) Publication number: 0 057 352 B1

(12) EUROPEAN PATENT SPECIFICATION

(45) Date of publication of patent specification: 23.07.86

(51) Int. Cl.⁴: C 08 F 10/00, C 08 F 4/64

(21) Application number: 82100201.1

(22) Date of filing: 13.01.82

# (54) Process for producing polyolefin.

(30) Priority: 05.02.81 JP 16195/81
25.06.81 JP 98639/81

(43) Date of publication of application:
11.08.82 Bulletin 82/32

(45) Publication of the grant of the patent:
23.07.86 Bulletin 86/30

(84) Designated Contracting States:
DE FR GB IT

(56) References cited:
EP-A-0 022 376
FR-A-2 311 038
GB-A-2 020 672
GB-A-2 051 833

CHEMICAL ABSTRACTS, vol. 95, no. 4, August 1981, page 19, no. 62990t, Columbus Ohio (USA);

(73) Proprietor: MITSUBISHI CHEMICAL INDUSTRIES LIMITED
5-2, Marunouchi 2-chome Chiyoda-ku
Tokyo 100 (JP)

(72) Inventor: Tanaka, Toru
9-13, Tsukimino 7-chome
Yamato-shi, Kanagawa-ken (JP)
Inventor: Murakami, Atsushi
26-8, Mita 1-chome
Tama-ku, Kawasaki-shi (JP)
Inventor: Kishiro, Osamu
8-3, Minamitsukushino 3-chome
Machida-shi Tokyo (JP)
Inventor: Gohko, Nobuaki
1-41-41, Hiroe 3-chome
Kurashiki-shi Okayama-ken (JP)

(74) Representative: Wächtershäuser, Günter, Dr.
Tal 29
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 057 352 B1

Courier Press, Leamington Spa, England.

**Description**

Background of the invention

Field of the invention

The present invention relates to a process for producing a polyolefin as defined in the preamble of the main claim. More particularly, it relates to a process for producing a polyolefin by two step polymerization under a specific condition in the presence of a specific catalyst and a cocatalyst to impart excellent extruding property, excellent stability in an inflation process of a tubular product, excellent texture, impact strength and environmental stress crack resistance of a film and excellent strength of an inflation molded film and less formation of fisheye.

Description of the prior art

In general, polyethylene is molded into a film by an inflation process or T-die process etc. Recently, the speed for molding has been increased because of an improvement of a molding machine and an improvement of productivity. When the speed for molding is increased especially in an inflation process, the extruded molten tubular polymer becomes unstable and a uniform film is not easily obtained and the appearance of the film is sometimes inferior.

In order to obtain a tubular product in a stable process, it has been considered to incorporate a radical initiator. When the content of the radical initiator is too high the strength of the film is inferior to cause a gel or spots and the range for the balance of the stability of the tubular product and the strength of the film are narrow.

The inventors have studied processes for producing a polyolefin which has excellent moldability especially extrusion property and stability of a tubular product in an inflation process, excellent texture of a film and has excellent impact strength and environmental stress crack resistance, high strength of an inflation molded film and less fisheye.

Summary of the invention

It is an object of the present invention to provide a process for producing a polyolefin having excellent moldability and physical properties and less fisheye by selecting a ratio of polymers, molecular weights and copolymerization degree and selecting a transition metal compound as a main catalyst and an organoaluminum compound as a co-catalyst.

Another object of the present invention is to provide a process for producing a polyolefin which has excellent moldability especially extrusion property and stability of a tubular product in an inflation process, excellent texture of a film and has excellent impact strength and environmental stress crack resistance, high strength of an inflation molded film and less fisheye.

The foregoing and other objects of the present invention are attained by a process according to the preamble of the main claim, which is characterized in that (a) the transition metal compound is a solid reaction product obtained by adding ethylaluminum sesquichloride to an inert hydrocarbon solution containing a compound represented by the formula:

$$Mg(OR^1)_mX^1_{2-m}$$

wherein $R^1$ represents an alkyl, aryl or cycloalkyl group; $X^1$ represents a halogen atom and m is 1 or 2 and titanium tri-n-butoxymonochloride to react them; (b) the polymerization reaction is carried out in two steps i.e. first and second polymerization steps and the polymerization in the second polymerization step is conducted in the presence of a reaction mixture obtained by the first polymerization step (c) in one of the first and second polymerization steps, the polymerization is conducted in the presence of hydrogen at a molar ratio of $H_2$ to $C_2H_4$ (vapor phase) or 0.01—0.8 to produce a polymer A having a viscosity average molecular weight of $2\times10^5$—$7\times10^5$ at a ratio of 30 to 70 wt.% based on the total polymer and in the other polymerization step, the polymerization is conducted in the presence of hydrogen at a molar ratio of $H_2$ to $C_2H_4$ (vapor phase) of 1.5—15 to produce a polymer B having a viscosity average molecular weight of $1\times10^4$—$4\times10^4$ at a ratio of 70 to 30 wt.% based on the total polymer to give a ratio of a viscosity average molecular weight of polymer A to a viscosity average molecular weight of polymer B of 15 to 55; (d) said polymer A is a copolymer of ethylene and other α-olefin and said polymer B is a homopolymer of ethylene or a copolymer of ethylene and other α-olefin.

The present invention also provides a process for producing a polyolefin which comprises polymerizing ethylene or copolymerizing ethylene and another α-olefin in the presence of a catalyst system of an organoaluminum compound and a transition metal compound component as a reaction product obtained by reacting an oxygen-containing organomagnesium compound with a titanium halide compound or a reaction product obtained by reacting an oxygen-containing organomagnesium compound, an oxygen-containing organotitanium compound with an aluminum halide compound wherein said organoaluminum compound is alkylaluminum chloride or a mixture of a trialkylaluminum and an alkylaluminum chloride.

Detailed description of the preferred embodiments

The catalyst system used in the process of the present invention comprises a solid catalytic component containing a magnesium compound and a titanium compound and a cocatalyst of an organoaluminum compound. A polymer having excellent moldability (extrusion property and stability of a tubular product), excellent impact strength and environmental stress crack resistance and high strength of film and less fisheye can be obtained by using the catalyst system under the following condition. This is superior to the polyolefin produced by using the other catalyst system such as a catalyst system containing the same solid catalytic component and trialkylaluminum as an organoaluminum compound.

The typical solid catalytic components containing the magnesium compound and the titanium compound can be exemplified in (a) to (e):

(a) a reaction product obtained by reacting an oxygen-containing organomagnesium compound and an oxygen-containing organotitanium compound with an aluminum halide compound;

(b) a reaction product obtained by reacting an oxygen-containing organomagnesium compound and an oxygen-containing organotitanium compound with a silicon halide compound;

(c) a reaction product obtained by reacting an oxygen-containing organomagnesium compound with a titanium halide compound;

(d) a reaction product obtained by reacting magnesium dihalide, an oxygen-containing organomagnesium compound, an oxygen-containing organotitanium compound with an aluminum halide compound; and

(e) a reaction product obtained by reacting a titanium compound with a solid obtained by treating a magnesium-containing solid with an oxygen-containing organoboron compound.

The production of the catalytic compounds (a) to (e) will be illustrated in detail.

Preparation of catalytic component (a)

The oxygen-containing organomagnesium compound used for the preparation of the reaction product (a) is represented by the formula:

$$Mg(OR^1)_mX^1_{2-m}$$

wherein $R^1$ represents an alkyl, aryl or cycloalkyl group; $X^1$ represents a halogen atom and m is 1 or 2. Suitable compounds include magnesium diethoxide, magnesium dimethoxide, magnesium diphenoxide, magnesium monoethoxychloride, magnesium monophenoxychloride, magnesium monoethoxybromide and magnesium monoethoxyiodide. It is optimum to use magnesium ethoxide.

The oxygen-containing organotitanium compound is represented by the formula:

$$Ti(OR^2)_nX^2_{4-n}$$

wherein $X^2$ represents a halogen atom; $R^2$ represents an alkyl, aryl or cycloalkyl group; and n is selected in a range of 1 to 4. Suitable compounds include titanium tetraethoxide, titanium tetra-n-butoxide, titanium diethoxydichloride, titanium di-n-butoxydichloride, titanium triethoxymonochloride, titanium tri-n-butoxymonochloride, titanium ethoxytrichloride, titanium n-butoxytrichloride and titanium methoxytribromide. It is optimum to use titanium tri-n-butoxymonochloride.

The aluminum halide compound is represented by the formula:

$$AlR^3_pX^3_{3-p}$$

wherein $R^3$ represents an alkyl, aryl or cycloalkyl group; $X^3$ represents a halogen atom; and p is $0<p<3$. Suitable compounds include ethylaluminum dichloride, ethylaluminum sesquichloride, diethylaluminum monochloride and n-propylaluminum dichloride. It is optimum to use ethylaluminum sesquichloride.

In the reaction of the components, the oxygen-containing organomagnesium compound and the oxygen-containing organotitanium compound are mixed and the mixture is heated at 100°C to 160°C to prepare a uniform liquid. If a uniform liquid is not formed, it is preferable to add an alcohol such as ethanol, n-butanol and n-octanol. An inert hydrocarbon solvent is added to the uniform liquid to prepare an inert hydrocarbon solution.

The aluminum halide compound is added to the resulting inert hydrocarbon solution to react them at an ambient temperature to 100°C. The reaction product is obtained as precipitate and the unreacted components are removed by washing with an inert hydrocarbon solvent.

The ratios of the components are preferably as follows: A molar ratio of the titanium compound to the magnesium compound (Ti/Mg) is in a range of 0.1 to 10. A molar ratio of the aluminum halide compound to the sum of moles of the magnesium compound and moles of the titanium compound (Al compound)/(Mg compound+Ti compound) is in a range of 1 to 20.

Preparation of catalytic component (b)

The oxygen-containing organomagnesium compound and the oxygen-containing organotitanium

compound used in the preparation of the reaction product (b) can be the compounds used in the preparation of the reaction product (a).

The silicon halide compound is represented by the formula:

$$R^4_qSiX^4_{4-q}$$

wherein $R^4$ represents an alkyl, aryl or cycloalkyl group; $X^4$ represents a halogen atom; and q is $0 \leqq q \leqq 2$. It is preferable to use the compound having chlorine atom as $X^4$. Suitable compounds include silicon tetrachloride, methyl trichlorosilane, ethyl trichlorosilane, phenyl trichlorosilane and diethyl dichlorosilane. It is optimum to use a silicon chloride compound having q=0 such as silicon tetrachloride.

In the reaction of the components, the reaction of the oxygen-containing organomagnesium compound with the oxygen-containing organotitanium compound is performed as the reaction in the preparation of the catalytic component (a). The silicon halide compound is added to the resulting inert hydrocarbon solution to react them at an ambient temperature to 100°C. The reaction product is obtained as precipitate and the unreacted components are removed by washing with an inert hydrocarbon solvent.

The ratios of the components are preferably as follows: A molar ratio of the titanium compound to the magnesium compound (Ti/Mg) is in a range of 0.1 to 10. A molar ratio of the silicon halide compound to the sum of moles of the magnesium compound and moles of the titanium compound (Si compound)/(Mg compound+Ti compound) is in a range of 1 to 20.

Preparation of catalytic component (c)

The oxygen-containing organomagnesium compound and the oxygen-containing organotitanium compound used in the preparation of the reaction product (c) can be the compounds used in the preparation of the reaction product (a).

The titanium halide compound is represented by the formula

$$TiX^5_r(OR^5)_{4-r}$$

wherein $X^5$ represents a halogen atom, $R^5$ represents an alkyl, aryl or cycloalkyl group and r is selected in a range of 1 to 4. Suitable compounds include titanium tetrahalides such as titanium tetrachloride, titanium tetrabromide and titanium tetraiodide, and titanium monoethoxytrichloride, titanium monomethoxytribromide and titanium diethoxydichloride. It is optimum to use titanium tetrahalides.

In the reaction of the components, the reaction of the oxygen-containing organomagnesium compound with the titanium halide compound is performed by contacting them in the presence or absence of an inert hydrocarbon solvent at 50°C to 200°C. The reaction product is obtained as precipitate and the unreacted components are removed by washing with an inert hydrocarbon solvent.

A ratio as an atomic ratio of Ti to Mg is not critical. When it is too high, the titanium component is wasted whereas when it is too small, the polymerization activity is inferior. The molar ratio of Ti/Mg is usually in a range of 0.1 to 100.

Preparation of catalytic component (d)

The magnesium dihalide compound used for the preparation of the reaction product (d) is represented by the formula

$$MgX^6_2$$

wherein $X^6$ represents a halogen atom. Suitable compounds include magnesium chloride, magnesium bromide and magnesium iodide. It is optimum to use magnesium chloride.

The other components can be the same as the compounds used in the preparation (a).

In the preparation of the reaction product (d) the oxygen-containing organomagnesium compound and the oxygen-containing organotitanium compound are mixed and the mixture is heated at 100°C to 160°C to prepare a uniform liquid. When a uniform liquid is not formed, it is preferable to add an alcohol. Then, a hydrocarbon solvent is added to prepare a hydrocarbon solution. The magnesium dihalide compound is added to the hydrocarbon solution to form a suspension and then the aluminum halide compound is added to react them at an ambient temperature to 100°C. The reaction product is obtained as a precipitate. The unreacted product is removed by washing with an inert solvent.

The ratios of the components are preferably as follows: A molar ratio of the titanium compound to the oxygen-containing organomagnesium compound is in a range of 0.1 to 10. A molar ratio of the aluminum halide compound to the sum of moles of the oxygen-containing organomagnesium compound and moles of the titanium compound a (Al compound)/(Mg compound+Ti compound) is in a range of 1 to 20.

Preparation of catalytic component (e)

The magnesium-containing solid used in the preparation of the reaction product (e) can be any solids made of magnesium and another element and can be a compound, a mixture, and eutectic crystal. However, the effect of the present invention is not satisfactorily attained by using metallic magnesium or

alloy thereof. Suitable magnesium-containing solids include magnesium halides such as magnesium fluoride, magnesium chloride, magnesium bromide, magnesium iodide; magnesium hydroxide, magnesium carbonate, magnesium hydroxychloride, magnesium oxide, and organic salts of magnesium such as magnesium oxalate and magnesium acetate; magnesium alcoholates such as magnesium methylate, magnesium ethylate and magnesium phenolate; magnesium haloalcoholate such as magnesium monochloromonoethoxide; complex oxides or alcoholates of magnesium and other metal such as calcium; magnesium-containing minerals such as hydrocalcite, montmorillonite and sepiolite. The optimum magnesium-containing solids are magnesium halides, magnesium hydroxychloride, magnesium alcoholates and magnesium haloalcoholates.

The boron compound used in the preparation is represented by the formula

$$B(OR^7)_nX^7_{3-n}$$

wherein $R^7$ represents a $C_1$—$C_{14}$ hydrocarbon moiety; $X^7$ represents a halogen atom; and n is selected in a range of 1—3.

The hydrocarbon moiety as $R^7$ can be alkyl, aryl and aralkyl group and can be the same or different in the case of plurality of $R^7$. The halogen atom as $X^7$ can be Cl, Br and I and is preferably Cl. Suitable boron compounds having the formula include boron trialkoxides such as $B(OCH_3)_3$, $B(OC_2H_5)_3$, $B(OC_3H_7)_3$, B(O-iso-$C_3H_7)_3$, B(O-n-$C_4H_9)_3$, B(O-iso-$C_4H_9)_3$, $B(OC_6H_5)_3$, $B(OC_6H_4CH_3)_3$ and $B(OCH_2C_6H_5)_3$ and boron haloalkoxides such as B(O-iso$C_3H_7)_2$Cl, $B(OCH_3)(OC_6H_5)Cl$ and B(O-iso$C_3H_7)Cl_2$.

The process for treating the magnesium-containing solid with the boron compound is not critical. After thoroughly contacting them, if necessary, excess of the boron compound is removed.

A ratio of the boron compound to the magnesium-containing solid in the treatment is not critical. When the amount of the boron compound is too small, the effect is not remarkable. The boron compound is preferably used at a molar ratio of 0.001 or more based on magnesium of the magnesium-containing solid in order to prepare a catalyst having high activity.

The temperature for treatment is selected from the range of 20 to 400°C preferably 50 to 300°C. The time required for treatment can be controlled depending upon the temperature for treatment and is usually 5 min. or longer preferably 30 min. to 10 hours. It can be longer though it is unnecessary.

The titanium compound is supported on the resulting solid. Suitable titanium compounds include titanium tetrachloride, titanium tetrabromide, titanium ethoxytetrachloride, titanium diethoxydichloride, titanium dibutoxydichloride and titanium phenoxytrichloride.

The process for supporting the titanium compound on the solid can be the known supporting process. It is preferable to contact them in the absence of a solvent at 50 to 300°C especially 100 to 150°C. The time required for treatment is in a range of 5 min. to 10 hours. It can be longer though it is unnecessary.

The organoaluminum compound combined with the solid catalytic component can be alkylaluminum chlorides and mixtures of alkylaluminum chloride and trialkylaluminum. In the case of the mixture of alkylaluminum chloride and trialkylaluminum, an atomic ratio of Cl to Al (Cl/Al) is preferably in a range of 0.1 to 1.5 preferably 0.5 to 1.

The alkylaluminum chlorides can be dialkylaluminum chlorides, alkylaluminum sesquichlorides and alkylaluminum dichlorides. Suitable dialkylaluminum chlorides include diethylaluminum chloride, diisobutylaluminum chloride and ethylmethylaluminum chloride. Suitable alkylaluminum sesquichlorides include ethylaluminum sesquichloride, isobutylaluminum sesquichloride and isopropylaluminum sesquichloride. Suitable alkylaluminum dichlorides include ethylaluminum dichloride, and isobutylaluminum dichloride. On the other hand, trialkylaluminums include triethylaluminum, triisobutylaluminum, triisoprenylaluminum and ethyldiisopropylaluminum. The alkyl groups of the organoaluminum compounds as the cocatalyst are usually $C_{1-12}$ alkyl groups.

The trialkylaluminum and the alkylaluminum chloride can be mixed before charging them into a reactor or can be mixed in a reactor.

A ratio of the organoaluminum compound as the cocatalyst in the form of the mixture to the solid catalytic component as an atomic ratio of Al/Ti is preferably in a range of 0.1 to 100 especially 1 to 20.

In the process of the present invention, a polymerization of ethylene or a copolymerization of ethylene and another α-olefin is carried out in a hydrocarbon solvent with the catalyst at 50 to 100°C.

Suitable hydrocarbon solvents include aliphatic hydrocarbons such as hexane and heptane; and aromatic hydrocarbons such as benzene, toluene and xylene; and alicyclic hydrocarbons such as cyclohexane and methyl cyclohexane as inert hydrocarbon solvents.

The α-olefin as a comonomer is represented by the formula:

$$R^8{-}CH{=}CH_2$$

wherein $R^8$ represents a $C_{1-12}$ alkyl group. Suitable olefins include propylene, butene-1, hexene-1, 4-methylpentene-1 and octene-1. A content of the comonomer is usually 5 mol % or less in the polymer.

In the process of the present invention, the polymerization is carried out under the following condition (A), (B), (C) and (D):

(A) The polymerization is carried out in two step reactions wherein a reaction mixture obtained by a polymerization in the first step is mixed in the second step of a polymerization;

(B) In one of the first and second reaction steps, a polymerization is carried out in the presence of hydrogen at a molar ratio of hydrogen to ethylene in a vapor phase of 0.01 to 0.8 to produce a polymer A having a viscosity average molecular weight of $2\times10^5$—$7\times10^5$ at a ratio of 30 to 70 wt.% based on the total polymers; and in the other reaction step, a polymerization is carried out in the presence of hydrogen at a molar ratio of hydrogen to ethylene in a vapor phase of 1.5 to 15 to produce a polymer (B) having a viscosity average molecular weight of $1\times10^4$—$4\times10^4$ at a ratio of 70 to 30 wt.% based on the total polymers to give a ratio of the viscosity average MW of polymer. A to the viscosity average MW of polymer B of 15 to 55;

(C) The polymer A is a copolymer of ethylene and another α-olefin and the polymer B is a homopolymer of ethylene or a copolymer of ethylene and the other α-olefin;

(D) The melt index of the total polymers is less than 0.5 g./10 min.

The conditions (A), (B), (C) and (D) will be further illustrated. The two step polymerization can be carried out in a continuous polymerization or a batch polymerization. In the case of the continuous polymerization, two reactors are connected in series. The reaction mixture obtained in the first reactor is fed into the second reactor to continue the polymerization. If necessary, a flash vessel for purging most of hydrogen is placed between the two reactors. In the batch polymerization, the polymerizations are sequentially carried out in one reactor. It is preferable to employ the continuous polymerization process.

Under the condition (B), in one of the first and second steps, the polymerization is carried out in the presence of hydrogen at a molar ratio of hydrogen to ethylene in a vapor phase of 0.01 to 0.8 to produce a polymer having a viscosity average molecular weight of $2\times10^5$ or $7\times10^5$ at a ratio of 30 to 70 wt.% based on the total polymers. The viscosity average molecular weight is calculated from an intrinsic viscosity measured at 130°C in tetrahydronaphthalene by the equation:

$$[\eta]=4.60\times10^{-4}\times M^{0.725}$$

wherein [η] represents an intrinsic viscosity and M represents a viscosity average molecular weight.

When the polymer A is produced in the second step in the presence of the polymer B obtained in the first step, the polymer A has a viscosity average molecular weight given by the equation:

$$[\eta]_A=(100[\eta]-W_B[\eta]_B)/W_A$$

wherein $[\eta]_A$ represents an intrinsic viscosity of the polymer A; $[\eta]_B$ represents an intrinsic viscosity of the polymer B and [η] represents an intrinsic viscosity of the total polymer obtained in the second step; $W_A$ represents an amount (wt.%) of the polymer A produced in the second step; and $W_B$ represents an amount (wt.%) of the polymer B produced in the first step. Therefore, the viscosity average molecular weight can be calculated from $[\eta]_A$.

When the viscosity average molecular weight is less than $2\times10^5$, the resulting polymer (the total polymers) has inferior impact strength, tear strength and low environmental stress cracking resistance whereas when it is more than $7\times10^5$, the polymer has inferior processability. The molecular weight is preferably in a range of $2.3\times10^5$—$6\times10^5$ especially $3\times10^5$—$6\times10^5$.

When a molar ratio of hydrogen to ethylene in a vapor phase is less than 0.01, the viscosity average molecular weight may be more than $7\times10^5$ whereas when it is more than 0.5, the viscosity average molecular weight may be less than $2\times10^5$. When the ratio of the production of the polymer A is less than 30 wt.%, the resulting total polymers have inferior impact strength and tear strength and low environmental stress cracking resistance whereas when it is more than 70 wt.%, the processability is inferior.

The ratio of the polymer A is preferably in a range of 30 to 60 wt.% especially 35 to 55 wt.%.

The polymerization can be carried out at 50 to 100°C for 10 min. to 10 hours under a pressure of 0.5 to 100 kg/cm$^2$ (gauge).

The polymer A is a copolymer having a comonomer component at a content of 0.1 to 4 mole % preferably 0.5 to 3 mole %, in view of the processability and the impact strength.

In the other reaction step, the polymer B having a viscosity average molecular weight of $1\times10^4$—$4\times10^4$ is produced at a ratio of 70 to 30 wt.% based on the total polymers by polymerizing in the presence of hydrogen at a molar ratio of hydrogen to ethylene in vapor phase of 1.5 to 15. The viscosity average molecular weight can be calculated by the aforementioned equation by measuring an intrinsic viscosity at 130°C in tetrahydronaphthaline.

When the polymer B is produced in the second step in the presence of the polymer A obtained in the first step, the viscosity average molecular weight of the polymer B is given by the equation:

$$[\eta]_B=(100[\eta]-W_A'[\eta]_A/W_B'$$

wherein $[\eta]_B$ represents an intrinsic viscosity of the polymer B; $[\eta]_A$ represents an intrinsic viscosity of the total polymers obtained in the second step; $W_A'$ represents an amount (wt.%) of the polymer A obtained in

the first step and $W_B'$ represents an amount (wt.%) of the polymer B obtained in the second step. The viscosity average molecular weight can be calculated from $[\eta]_B$.

When the viscosity average molecular weight is less than $1\times10^4$, the total polymers have inferior impact strength whereas when it is more than $4\times10^4$, the processability is inferior.

When a molar ratio of hydrogen to ethylene in vapor phase is less than 1.5, the viscosity average molecular weight of the polymer B may be more than $4\times10^4$ whereas when it is more than 15, the viscosity average molecular weight may be less than $1\times10^4$. The viscosity average molecular weight of the polymer B is preferable in a range of $1\times10^4$ to $3.5\times10^4$. When a ratio of the polymer B is more than 70 wt.%, the total polymers have inferior impact strength and tear strength and low environmental stress cracking resistance whereas when it is less than 30 wt.%, the processability is inferior. The ratio of the polymer B is preferably in the range of 70 to 40 wt.% especially 65 to 45 wt.%.

The polymerization is carried out at 50°C to 100°C for 10 min. to 10 hours under a pressure of 0.5 to 100 kg./cm$^2$ (gauge). The polymer B is preferably homopolymer of ethylene and can be a copolymer having a comonomer component at a content of 2 mole % or less preferably 1 mole % or less. The content of the comonomer component is preferably small in view of rigidity.

The order of the polymerizations can be the order of the production of the polymer A followed by the production of the polymer B or the order of the production of the polymer B followed by the production of the polymer A.

A ratio of the viscosity average molecular weight of the polymer A to the viscosity average molecular weight of the polymer B is in a range of 15 to 55 preferably 20 to 50. When the ratio is less than 15, the processability is inferior whereas when it is more than 55, the impact strength is inferior.

Under the condition (D), the melt index of the total polymers as a mixture of the polymer A and the polymer B is less than 0.5. The melt index is measured by ASTM D-1238 at 190°C under a load of 2.16 kg. The unit is g./10 min. When the melt index is more than 0.5, the total polymers have inferior impact strength and lower environmental stress crack resistance whereas when the melt index is in a range of 0.1 to 0.5, the total polymers have excellent processability and environmental stress crack resistance and a small Barus effect whereby the polymers have high speed processability in a blow molding or an extrusion molding to have less edge tear. When the melt index is less than 0.1, the processability is superior. Even though the melt index is less than 0.05, the processability is still good and a surging of an extruder can be prevented to be advantageous in the field of a thin film and a large size blow molding.

The resulting polymers are preferably kneaded. The polymers obtained by the process of the present invention are easily mixed in uniform, for example, by a continuous kneading by a monoaxial extruder. The polymers obtained by the kneading has an advantage of no formation of fisheye.

The present invention will be illustrated by certain examples and references which are provided for purposes of illustration only and are not intended to be limiting the invention.

In the examples, the physical properties were tested by using samples obtained by kneading each polymer powder by a dulmage-screw extruder having an inner diameter of 40 mm and L/D of 24 and pelletizing it.

The extrusion rate as a level of the processability was measured by using a monoaxial extruder (EA-40) having L/D of 26, a compression ratio of 3.5, full-fleighted-screw and a diameter of a die of 50 mm and a clearance of 1.0 manufactured by Modern Machinery Co. at a temperature of the die of 200°C and a speed of 90 r.p.m. as an extruded amount (g) per minute.

The stability of tubular product and the fisheye were respectively measured by observing the film in an inflation molding at a blow up ratio of 4, a running speed of 20 to 50 m/min. a frost line height of 50 cm, and a thickness of the film of 10 μm.

The strength of the film was tested by the Elmendorf tear strength in JIS P8116 and the Dart drop impact in ASTM D-1709.

The physical properties of polyethylene as MI (melt index) and FR (flow ratio) were measured as follows:

| | |
|---|---|
| MI (melt index) | ASTM D-1238-65T |
| FR (flow ratio) | Mitsubishi Chem. Ind. method. |

Each flow rate under a pressure of $10^6$ dyne/cm$^2$ and $10^5$ dyne/cm$^2$ was measured by a MI tester and a nozzle for MI measurement and a ratio of the flow rates was calculated by the scale of non-Newton's flow of a melted polyethylene.

ESCR (environmental stress crack resistance) was measured by ASTM D-1693-70.

Density was measured by the density gradient method of JIS K6760.

"MD" is the film tear strength in the machine direction, i.e. in the flow direction.

"TD" is the film tear strength in the transverse direction, i.e. perpendicular to the flow direction.

Examples 1 to 13

References 1 to 4

(1) Preparation of the catalyst

(A) A mixture of 115 g. of magnesium ethoxide, 151 g. of titanium tri-n-butoxymonochloride and 37 g.

of n-butanol was mixed at 140°C for 6 hours to be uniform. Then, the mixture was cooled to 60°C and admixed with benzene to form a uniform solution. At each predetermined temperature, 620 g. of ethylaluminum sesquichloride was added dropwise and the mixture was stirred for 1 hour. The resulting precipitate was washed with n-hexane to obtain a catalytic component. A part of the resulting solid was dried to give a powder which contained 11.0 wt.% of Mg component and 10.5 wt.% of Ti component.

(B) A mixture of 57 g. of magnesium ethoxide and 150 g. of titanium tri-n-butoxymonochloride was mixed at 130°C for 6 hours to be uniform. The mixture was cooled to 60°C and admixed with benzene to form a uniform solution and then, 850 g. of silicon tetrachloride was added dropwise and the mixture was stirred for 1 hour. The resulting precipitate was washed with n-hexane to obtain a catalytic component.

(C) A reaction of 10 g. of magnesium ethoxide and 70 ml. of titanium tetrachloride was carried out at 130°C for 2 hours and the reaction product was cooled and washed with n-hexane to obtain a catalytic component.

(D) (i) A mixture of 5.7 g of magnesium ethoxide, 7.5 g. of titanium tributoxymonochloride and 1.8 g. of n-butanol was mixed and stirred at 140°C for 6 hours to be uniform and then benzene was added to form a uniform solution.

(ii) A commercial anhydrous magnesium chloride was dried at 200°C for 5 hours under a reduced pressure and 43 g. of the product was pulverized by a vibration mill for 75 hours.

(iii) The products in (i) and (ii) were mixed and 37 g. of ethylaluminum sesquichloride was added at each predetermined temperature and the mixture was stirred for 1 hour. The resulting precipitate was washed with n-hexane to obtain a catalytic component.

(E) A commercial anhydrous magnesium chloride was dried at 200°C for 5 hours under a reduced pressure. A mixture of 10 g. of the dried product and 60 ml. of $B(O\text{-iso}C_3H_7)_3$ was heated at 80°C for 2 hours and then the residual boron compound was vaporized at 50°C under a reduced pressure to obtain a solid powder. A reaction of the solid powder and 100 ml. of titanium tetrachloride was carried out at 130°C for 2 hours. After cooling it, the reaction product was washed with n-hexane to obtain a catalytic component.

(2) Polymerization

Into a 5 liter autoclave, 3 liter of n-hexane and each slurry of each catalytic component in an amount shown in Table 1 were charged and each organoaluminum shown in Table 1 in each predetermined amount was charged. The autoclave was heated to each predetermined temperature and hydrogen was fed. Then, ethylene was fed to perform a polymerization at a molar ratio of $H_2/C_2H_4$ in vapor phase shown in Table 1. The amount of the polymer was calculated by the sum of the feed of ethylene.

When a desired yield was given, the feed of ethylene was stopped to finish the polymerization in the first step. The polymerization in the second step was started after purging hydrogen. In the second step, the α-olefin was fed and ethylene was continuously fed at a molar ratio of $H_2/C_2H_4$ in vapor phase shown in Table 1 to perform the polymerization under a constant pressure at a constant temperature.

In Example 12, ethylaluminum sesquichloride was newly added in the second step.

The amount of the polymer was calculated by the amount of the feed of ethylene. The physical properties of the resulting polymers measured are shown in Table 1.

Note:

| | | |
|---|---|---|
| X | : | unmeasurable |
| $1\text{-}C_4H_8$ | : | 1-butene |
| $1\text{-}C_6H_{10}$ | : | 1-hexene |
| $1\text{-}C_8H_{16}$ | : | 1-octene |
| $Al(Et)_2Cl$ | : | diethylaluminum chloride |
| $Al(Et)_3$ | : | triethylaluminum |
| $AlEtCl_2$ | : | ethylaluminum dichloride |
| $Al(i\text{-}Bu)_3$ | : | triisobutylaluminum |
| $Al_2Et_3Cl_3$ | : | ethylaluminum sesquichloride. |

TABLE 1

| | | Exp. 1 | Exp. 2 | Exp. 3 | Exp. 4 |
|---|---|---|---|---|---|
| Kind and amount of catalyst [mg] | | A 30 | A 30 | A 30 | A 30 |
| Co-catalyst | Kind | $Al(Et)_2Cl$ | $Al(Et)_2Cl+$ $Al(Et)_3$ | $Al(Et)Cl_2+$ $Al(Et)_3$ | $Al(Et)_2Cl+$ $Al(Et)_3$ |
| | Amount (m mol) | 0.5 | 0.45+0.05 (0.5) | 0.18+0.32 (0.5) | 0.25+0.25 (0.5) |
| | Cl/Al | 1 | 0.9 | 0.7 | 0.5 |
| First step | Reaction temp. (°C) | 90 | 90 | 90 | 80 |
| | Molar ratio of $H_2/C_2H_4$ in vapor phase | 9.5 | 7.0 | 8.0 | 6.5 |
| | α-Olefin | none | none | none | $1-C_4H_8$ |
| | Amount of α-olefin (wt.%) | none | none | none | 1.0 |
| | Time (min.) | 240 | 90 | 75 | 60 |
| | Amount of polyolefin B (wt.%) | 50 | 55 | 50 | 50 |
| | MW of polyolefin B ($\times 10^4$) | 1.3 | 1.1 | 1.4 | 1.2 |
| Second step | Reaction temp. (°C) | 70 | 70 | 70 | 80 |
| | Molar ratio of $H_2/C_2H_4$ in vapor phase | 0.25 | 0.18 | 0.12 | 0.10 |
| | α-Olefin | $1-C_4H_8$ | $1-C_4H_8$ | $1-C_4H_8$ | $1-C_4H_8$ |
| | Amount of α-olefin (wt.%) | 5.4 | 3.8 | 5.0 | 2.8 |
| | Time (min.) | 120 | 50 | 40 | 32 |
| | Amount of polyolefin A (wt.%) | 50 | 45 | 50 | 50 |
| | MW of polyolefin A ($\times 10^4$) | 38 | 42 | 40 | 35 |
| Properties of polymer | MI (g/10 min.) | 0.045 | 0.067 | 0.038 | 0.053 |
| | FR | 95 | 94 | 87 | 85 |
| | Density (g/cm³) | 0.949 | 0.953 | 0.950 | 0.950 |
| | Fisheye | none | none | none | none |
| | Stability of tubular product | good | good | good | good |
| | Extrusion molding rate (g) | 210 | 215 | 207 | 208 |
| | Film tear strength: MD (kg/cm) | 10.5 | 11.5 | 11.0 | 12.3 |
| | Film tear strength: TD (kg/cm) | 140 | 113 | 130 | 95 |
| | ESCR (hr.) | >1000 | >1000 | >1000 | >1000 |
| | Dart drop impact (g) | 780 | 520 | 830 | 650 |

TABLE 1 (contd.)

| | | Exp. 5 | Exp. 6 | Exp. 7 | Exp. 8 |
|---|---|---|---|---|---|
| Kind and amount of catalyst [mg] | | A 30 | A 30 | B 60 | C 60 |
| Co-catalyst | Kind | $Al(Et)_2Cl$+ $Al(Et)_3$ | $Al(Et)_2Cl$ | $Al(Et)_2Cl$+ $Al(i\text{-}Bu)_3$ | $Al_2Et_3Cl_3$+ $Al(Et)_3$ |
| | Amount (m mol) | 0.45+0.05 (0.5) | 0.5 | 0.7+0.3 (1) | 0.50+0.50 (1) |
| | Cl/Al | 0.9 | 1 | 0.7 | 0.75 |
| First step | Reaction temp. (°C) | 90 | 90 | 90 | 90 |
| | Molar ratio of $H_2/C_2H_4$ in vapor phase | 5.5 | 8.5 | 4.5 | 4.8 |
| | α-Olefin | none | none | none | none |
| | Amount of α-olefin (wt.%) | none | none | none | none |
| | Time (min.) | 95 | 228 | 90 | 75 |
| | Amount of polyolefin B (wt.%) | 60 | 50 | 50 | 47 |
| | MW of polyolefin B ($\times 10^4$) | 1.4 | 1.5 | 1.2 | 1.4 |
| Second step | Reaction temp. (°C) | 70 | 70 | 70 | 70 |
| | Molar ratio of $H_2/C_2H_4$ in vapor phase | 0.15 | 0.23 | 0.15 | 0.08 |
| | α-Olefin | 1-$C_6H_{12}$ | $C_3H_6$+ 1-$C_8H_{16}$ | 1-$C_4H_8$ | 1-$C_6H_{12}$ |
| | Amount of α-olefin (wt.%) | 6.0 | 6.5 | 5.0 | 5.6 |
| | Time (min.) | 65 | 100 | 70 | 50 |
| | Amount of polyolefin A (wt.%) | 40 | 50 | 50 | 53 |
| | MW of polyolefin A ($\times 10^4$) | 45 | 43 | 34 | 38 |
| Properties of polymer | MI (g/10 min.) | 0.050 | 0.030 | 0.062 | 0.028 |
| | FR | 102 | 76 | 61 | 77 |
| | Density (g/cm$^3$) | 0.950 | 0.951 | 0.953 | 0.952 |
| | Fisheye | none | none | none | none |
| | Stability of tubular product | good | good | good | good |
| | Extrusion molding rate (g) | 213 | 205 | 208 | 202 |
| | Film tear strength: MD (Kg/cm) | 40 | 15.3 | 12.0 | 50 |
| | Film tear strength: TD (kg/cm) | 220 | 130 | 108 | 255 |
| | ESCR (hr.) | >1000 | >1000 | >1000 | >1000 |
| | Dart drop impact (g) | 1,200 | 950 | 550 | 1,480 |

TABLE 1 (contd.)

| | | Exp. 9 | Exp. 10 | Exp. 11 |
|---|---|---|---|---|
| Kind and amount of catalyst [mg] | | C 60 | D 90 | E 100 |
| Co-catalyst | Kind | $Al(Et)_2Cl$ | $Al(Et)_2Cl+Al(Et)_3$ | $Al(Et)_2Cl+Al(Et)_3$ |
| | Amount (m mol) | 1.0 | 0.75+0.75 (1.5) | 1.2+0.3 (1.5) |
| | Cl/Al | 1 | 0.5 | 0.8 |
| First step | Reaction temp. (°C) | 80 | 80 | 90 |
| | Molar ratio of $H_2/C_2H_4$ in vapor phase | 6.3 | 7.5 | 10.5 |
| | α-Olefin | $1\text{-}C_4H_8$ | $1\text{-}C_6H_{12}$ | none |
| | Amount of α-olefin (wt.%) | 0.8 | 1.6 | none |
| | Time (min.) | 210 | 120 | 120 |
| | Amount of polyolefin B (wt.%) | 60 | 50 | 55 |
| | MW of polyolefin B ($\times 10^4$) | 1.4 | 1.5 | 1.2 |
| Second step | Reaction temp. (°C) | 75 | 80 | 70 |
| | Molar ratio of $H_2/C_2H_4$ in vapor phase | 0.20 | 0.17 | 0.28 |
| | α-Olefin | $1\text{-}C_4H_8$ | $1\text{-}C_6H_{12}$ | $1\text{-}C_4H_8$ |
| | Amount of α-olefin (wt.%) | 3.0 | 2.2 | 5.2 |
| | Time (min.) | 105 | 85 | 90 |
| | Amount of polyolefin A (wt.%) | 40 | 50 | 45 |
| | MW of polyolefin A ($\times 10^4$) | 49 | 35 | 45 |
| Properties of polymer | MI (g/10 min.) | 0.043 | 0.052 | 0.024 |
| | FR | 97 | 83 | 103 |
| | Density ($g/cm^3$) | 0.948 | 0.951 | 0.949 |
| | Fisheye | none | none | none |
| | Stability of tubular product | good | good | good |
| | Extrusion molding rate (g) | 212 | 214 | 210 |
| | Film tear strength: MD (kg/cm) | 10.3 | 28 | 13.2 |
| | Film tear strength: TD (kg/cm) | 104 | 185 | 125 |
| | ESCR (hr.) | >1000 | >1000 | >1000 |
| | Dart drop impact (g) | 720 | 1,070 | 720 |

TABLE 1 (contd.)

| | | Exp. 12 | | Exp. 13 | |
|---|---|---|---|---|---|
| Kind and amount of catalyst [mg] | | A 45 | | A 30 | |
| Co-catalyst | Kind | 1st step $Al(Et)_2Cl+Al(Et)_3$ | 2nd step $Al_2Et_3Cl_3$ | 1st step $Al(Et)_2Cl+Al(Et)_3$ | 2nd step |
| | Amount (m Mol) | 0.675+0.075 (0.75) | (0.75) | 0.45+0.05 (0.50) | |
| | Cl/Al | 0.9 | 1.2 | 0.9 | |
| First step | Reaction temp. (°C) | 90 | | 90 | |
| | Molar ratio of $H_2/C_2H_4$ in vapor phase | 6.5 | | 7.5 | |
| | α-Olefin | none | | none | |
| | Amount of α-olefin (wt.%) | none | | none | |
| | Time (min.) | 60 | | 90 | |
| | Amount of polyolefin B (wt.%) | 50 | | 50 | |
| | MW of polyolefin B ($\times 10^4$) | 1.2 | | 1.1 | |
| Second step | Reaction temp. (°C) | 70 | | 80 | |
| | Molar ratio of $H_2/C_2H_4$ in vapor phase | 0.22 | | 0.38 | |
| | α-Olefin | $1\text{-}C_4H_8$ | | $1\text{-}C_4H_8$ | |
| | Amount of α-olefin (wt.%) | 5.0 | | 1.0 | |
| | Time (min.) | 85 | | 60 | |
| | Amount of polyolefin A (wt.%) | 50 | | 50 | |
| | MW of polyolefin A ($\times 10^4$) | 38 | | 23 | |
| Properties of polymer | MI (g/10 min.) | 0.038 | | 0.34 | |
| | FR | 112 | | 67 | |
| | Density (g/cm³) | 0.951 | | 0.958 | |
| | Fisheye | none | | none | |
| | Stability of tubular product | good | | — | |
| | Extrusion molding rate (g) | 212 | | 330 | |
| | Film tear strength: MD (kg/cm) | 14.0 | | — | |
| | Film tear strength: TD (kg/cm) | 93 | | — | |
| | ESCR (hr.) | >1000 | | 650 | |
| | Dart drop impact (g) | 590 | | — | |

TABLE 1 (contd.)

| | | | Ref. 1 | Ref. 2 | Ref. 3 | Ref. 4 |
|---|---|---|---|---|---|---|
| Kind and amount of catalyst [mg] | | | A 30 | A 30 | B 60 | C 60 |
| Co-catalyst | Kind<br>Amount (m mol) | | $Al(Et)_3$<br>0.5 | $Al(Et)_3$<br>0.5 | $Al(i\text{-}Bu)_3$<br>1.0 | $Al(Et)_3$<br>1.0 |
| First step | Reaction temp. (°C) | | 90 | 80 | 90 | 90 |
| | Molar ratio of $H_2/C_2H_4$ in vapor phase | | 4.5 | 5.0 | 3.5 | 4.0 |
| | α-Olefin | | none | $1\text{-}C_4H_8$ | none | none |
| | Amount of α-olefin (wt.%) | | none | 1.3 | none | none |
| | Time (min) | | 95 | 82 | 100 | 100 |
| | Amount of polyolefin B (wt.%) | | 50 | 50 | 47 | 50 |
| | MW of polyolefin B ($\times10^4$) | | 1.4 | 1.2 | 1.5 | 1.4 |
| Second step | Reaction temp. (°C) | | 70 | 80 | 70 | 70 |
| | Molar ratio of $H_2/C_2H_4$ in vapor phase | | 0.06 | 0.07 | 0.05 | 0.04 |
| | α-Olefin | | $1\text{-}C_4H_8$ | $1\text{-}C_4H_8$ | $1\text{-}C_4H_8$ | $1\text{-}C_4H_8$ |
| | Amount of α-olefin (wt.%) | | 5.5 | 2.4 | 5.0 | 5.5 |
| | Time (min.) | | 75 | 50 | 95 | 70 |
| | Amount of polyolefin A (wt.%) | | 50 | 50 | 53 | 50 |
| | MW of polyolefin A ($\times10^4$) | | 39 | 36 | 36 | 40 |
| Properties of polymer | MI (g/10 min.) | | 0.040 | 0.055 | 0.051 | 0.038 |
| | FR | | 65 | 70 | 59 | 68 |
| | Density (g/cm³) | | 0.949 | 0.950 | 0.952 | 0.950 |
| | Fisheye | | formed | formed | formed | many |
| | Stability of tubular product | | bad | bad | bad | bad |
| | Extrusion molding rate (g) | | 200 | 190 | 185 | 190 |
| | Film tear strength: | MD (kg/cm) | X | X | X | X |
| | | TD (kg/cm) | X | X | X | X |
| | ESCR (hr.) | | — | — | — | — |
| | Dart drop impact (g) | | 750 | 630 | 580 | 760 |

Examples 14 to 19
References 5 and 6

In a 5 liter autoclave, 3 liter of n-hexane and one of the catalytic components (A)—(E) shown in Table 2 in a predetermined amount was charged and each organoaluminum compound shown in Table 2 in a predetermined amount was also charged. The autoclave was heated to each predetermined temperature and hydrogen was fed. Then, ethylene and the other α-olefin were fed and ethylene was continuously fed to perform a polymerization at a molecular ratio of $H_2/C_2H_4$ in vapor phase shown in Table 2. The amount of the polymer was calculated by the sum of the feed of ethylene.

When a desired yield was given, the feed of ethylene was stopped to finish the polymerization in the first step. The polymerization in the second step was started after charging hydrogen. Ethylene was continuously fed at a predetermined temperature shown in Table 2 at a molar ratio of $H_2/C_2H_4$ in vapor phase shown in Table 2 to perform the polymerization in the second step. The amount of the polymer was calculated as that of the first step.

The physical properties of the resulting polymers measured are shown in Table 2.

TABLE 2

| | | | Exp. 14 | Exp. 15 | Exp. 16 | Exp. 17 |
|---|---|---|---|---|---|---|
| Kind and amount of catalyst [mg] | | | A 30 | A 30 | B 60 | C 60 |
| Co-catalyst | Kind | | $Al(Et)_2Cl$ | $Al(Et)_2Cl+Al(Et)_3$ | $Al(Et)_2Cl+Al(Et)_3$ | $Al(Et)_2Cl$ |
| | Amount (m mol) | | 0.5 | 0.4+0.1 (0.5) | 0.7+0.3 (1.0) | 1.0 |
| | Cl/Al | | 1.0 | 0.8 | 0.7 | 1.0 |
| First step | Reaction temp. (°C) | | 70 | 70 | 70 | 70 |
| | Molar ratio of $H_2/C_2H_4$ in vapor phase | | 0.20 | 0.13 | 0.10 | 0.07 |
| | α-Olefin | | $1-C_4H_8$ | $1-C_4H_8$ | $1-C_4H_8$ | $1-C_4H_8$ |
| | Amount of α-olefin (wt.%) | | 4.1 | 2.8 | 3.3 | 3.0 |
| | Time (min.) | | 70 | 40 | 35 | 40 |
| | Amount of polyolefin A (wt.%) | | 40 | 50 | 50 | 40 |
| | MW of polyolefin A ($\times 10^4$) | | 46 | 38 | 38 | 45 |
| Second step | Reaction temp. (°C) | | 80 | 80 | 80 | 80 |
| | Molar ratio of $H_2/C_2H_4$ in vapor phase | | 7.5 | 6.0 | 6.0 | 6.5 |
| | Time (min.) | | 240 | 120 | 100 | 120 |
| | Amount of polyolefin B (wt.%) | | 60 | 50 | 50 | 60 |
| | MW of polyolefin B ($\times 10^4$) | | 1.3 | 1.6 | 1.3 | 1.4 |
| Properties of polymer | MI (g/10 min.) | | 0.053 | 0.038 | 0.044 | 0.048 |
| | FR | | 103 | 87 | 64 | 93 |
| | Density ($g/cm^3$) | | 0.948 | 0.953 | 0.952 | 0.950 |
| | Fisheye | | none | none | none | none |
| | Stability of tubular product | | good | good | good | good |
| | Extrusion molding rate (g) | | 210 | 207 | 205 | 207 |
| | Film tear strength: | MD (kg/cm) | 11.0 | 13.5 | 38 | 10.8 |
| | | TD (kg/cm) | 120 | 110 | 240 | 132 |
| | ESCR (hr.) | | >1000 | — | — | >1000 |
| | Dart drop impact (g) | | 680 | 820 | 1,150 | 650 |

TABLE 2 (contd.)

| | | Exp. 18 | Exp. 19 | Ref. 5 | Ref. 6 |
|---|---|---|---|---|---|
| Kind and amount of catalyst [mg] | | D 80 | E 100 | A 30 | C 60 |
| Co-catalyst | Kind | $Al(Et)_2Cl+$ $Al(Et)_3$ | $Al_2(Et)_3Cl_3$ $+Al(Et)_3$ | $Al(Et)_3$ | $Al(i\text{-}Bu)_3$ |
| | Amount (m mol) | 1.0+0.4 (1.4) | 0.7+0.8 (1.5) | 0.5 | 1.0 |
| | Cl/Al | 0.7 | 0.7 | | |
| First step | Reaction temp. (°C) | 70 | 70 | 70 | 70 |
| | Molar ratio of $H_2/C_2H_4$ in vapor phase | 0.07 | 0.15 | 0.04 | 0.03 |
| | α-Olefin | 1-$C_4H_8$ | 1-$C_4H_8$ | 1-$C_4H_8$ | 1-$C_4H_8$ |
| | Amount of α-olefin (wt.%) | 4.4 | 2.5 | 3.0 | 2.6 |
| | Time (min.) | 50 | 60 | 55 | 45 |
| | Amount of polyolefin A (wt.%) | 50 | 40 | 50 | 50 |
| | MW of polyolefin A ($\times 10^4$) | 42 | 45 | 40 | 38 |
| Second step | Reaction temp. (°C) | 80 | 80 | 80 | 80 |
| | Molar ratio of $H_2/C_2H_4$ in vapor phase | 9.0 | 10.0 | 4.5 | 4.0 |
| | Time (min.) | 150 | 150 | 150 | 140 |
| | Amount of polyolefin B (wt.%) | 50 | 60 | 50 | 50 |
| | MW of polyolefin B ($\times 10^4$) | 1.4 | 1.2 | 1.4 | 1.2 |
| Properties of polymer | MI (g/10 min.) | 0.030 | 0.055 | 0.036 | 0.045 |
| | FR | 85 | 108 | 73 | 70 |
| | Density (g/cm³) | 0.949 | 0.950 | 0.950 | 0.949 |
| | Fisheye | none | none | formed | formed |
| | Stability of tubular product | good | good | bad | bad |
| | Extrusion molding rate (g) | 203 | 210 | 185 | 188 |
| | Film tear strength: MD (kg/cm) | 12.5 | 10.5 | X | X |
| | Film tear strength: TD (kg/cm) | 124 | 103 | X | X |
| | ESCR (hr.) | — | — | — | — |
| | Dart drop impact (g) | 780 | 580 | — | — |

Example 20

Two reactors having each capacity of 0.6 m³ were used and a continuous polymerization was carried out.

In the first reactor, n-hexane was fed at a rate of 67 kg/hr. and a mixture of triethylaluminum and diethylaluminum chloride at a molar ratio of 1:9 was fed at a rate of 4 g./hr. and the solid catalytic component (A) was fed at a rate of 2.0 g./hr. and ethylene was fed at a rate of 24.0 kg./hr. by continuous feeding under maintaining a molar ratio of $H_2/C_2H_4$ in vapor phase at 90°C under a total pressure of 17 Kg/cm² (gauge) to perform the polymerization.

The slurry of the polymer produced in the first reactor was continuously fed into the second reactor wherein n-hexane was fed at a rate of 82 kg./hr. and ethylene was fed at a rate of 26.8 kg./hr. and 1-butene was fed at a rate of 3.0 kg./hr. by continuous feeding under maintaining a molar ratio of $H_2/C_2H_4$ in vapor phase of 0.17 and a molar ratio of $C_4H_8/C_2H_4$ in vapor phase of 0.055 at 70°C under a total pressure of 3 kg. to perform the polymerization. The slurry of the polymer was continuously discharged from the second

reactor and the polymer was dried. The yield of the polymer was 50 kg./hr. The polymers produced in the first reactor and in the second reactor had respectively viscosity average molecular weight of 13,000 and 370,000 and a ratio of the polymer was 50:50.

The physical properties of the polymer were measured.

The results are as follows:

MI=0.040; FR=90; Density=0.949; No fisheye: Extrusion rate=210 g./min. Stable bubble.

Tear strength of film (with notch)=11.3 kg./cm in longitudinal direction 149 kg./cm in transversal direction

Dart Drop Impact strength=780 g.

The texture of the film was fine.

In another embodiment of the present invention, a mixture of an alkylaluminum chloride and a trialkylaluminum is used as a cocatalyst which is not only remarkably effective for the aforementioned two step polymerization but also effective for one step polymerization to form a catalyst for producing a polyolefin which has remarkably high activity.

The use of the mixture of an alkylaluminum chloride and a trialkylaluminum as the cocatalyst in one step polymerization will be further illustrated.

In the catalyst of the present invention, the solid catalytic component is the aforementioned reaction product (c) obtained by reacting an oxygen-containing organomagnesium compound with a titanium halide compound or the aforementioned reaction product (a) obtained by reacting an oxygen-containing organomagnesium compound and an oxygen-containing organotitanium compound with an aluminum halide compound.

The oxygen-containing organomagnesium compound the oxygen-containing organotitanium compound, the titanium halide compound and the aluminum halide compound can be the compounds described above in the two step polymerization.

The preparations of the solid catalytic components can be the same described above in the two step polymerization. Therefore, the preparations of the solid catalytic components will not be repeated.

The feature of the embodiment is to use a mixture of a trialkylaluminum and an alkylaluminum chloride as the cocatalyst which is combined with the aforementioned solid catalytic component.

In general, the polymerization activity is reduced depending upon increase of the content of the halogen atom in the organoaluminum compound as the cocatalyst combined with the solid catalytic component. The tendency is found in the following references.

The polymerization activity is lowered in order of trialkylaluminums, dialkylaluminum chlorides, alkylaluminum sesquichlorides and alkylaluminum dichlorides. Thus, in the catalyst system of the present invention, high polymerization activity superior to the use of only the trialkylaluminum is surprisingly attained by the use of the mixture of the trialkylaluminum and the alkylaluminum chloride when the aforementioned solid catalytic component is combined. On the other hand, the polymerization activity is reduced depending upon increase of a content of a halogen atom in the mixture of the alkylaluminum compounds if a conventional titanium-containing solid catalytic component is combined. This tendency is also shown in the following reference.

A ratio of the alkylaluminum chloride to the trialkylaluminum as an atomic ratio of Cl/Al, in the mixture is preferably $0.1 \leqq Cl/Al \leqq 1.5$ especially $0.1 \leqq Cl/Al \leqq 0.9$.

When the mixture is selected from the range, the polymerization activity is remarkably superior to the use of only the trialkylaluminum, the dialkylaluminum chloride, the alkylaluminum sesquichloride and the alkylaluminum dichloride.

Suitable trialkylaluminums include triethylaluminum, triisobutylaluminum, triisoprenylaluminum and ethyldiisopropylaluminum.

The alkylaluminum chlorides can be dialkylaluminum chlorides, alkylaluminum sesquichloride and alkylaluminum dichlorides. Suitable dialkylaluminum chlorides include diethylaluminum chloride, diisobutylaluminum chloride and ethylmethylaluminum chloride.

Suitable alkylaluminum sesquichlorides include ethylaluminum sesquichloride, isobutylaluminum sesquichloride and isopropylaluminum sesquichloride. Suitable alkylaluminum dichlorides include ethylaluminum dichloride and isobutylaluminum dichloride.

The alkyl groups of the organoaluminum compounds as the cocatalyst can be $C_{1-12}$ alkyl groups.

The trialkylaluminum and the alkylaluminum chloride can be mixed before charging into a reactor or can be mixed in a reactor.

The amount of the mixture of the organoaluminum compounds as the cocatalyst as an atomic ratio of Al/Ti is in a range of 0.1 to 100 preferably 1 to 20.

The olefins used in the polymerization can be ethylene, propylene, butene-1, pentene-1, hexene-1 and octene-1 as α-olefins. It is possible to copolymerize the mixture of the olefins. The process of the present invention is especially effective for the production of homopolymer of ethylene and copolymers of ethylene and the other α-olefin at a content of 20 wt.% or less preferably 15 wt.% or less.

The polymerization can be carried out by conventional processes as a solution polymerization in an inert solvent, a slurry polymerization or a vapor phase polymerization in the absence of a solvent.

In accordance with the present invention, the catalyst system having remarkably high polymerization activity is obtained as a significant advantage. Moreover, the polymerization activity can be controlled

during the polymerization without changing an amount of the solid catalytic component by controlling a ratio of the alkylaluminum compounds.

The embodiment of the present invention will be further illustrated by certain examples and references.

Examples 21 to 24
References 7 and 8

A mixture of 15.1 g. of magnesium diethoxide, 20.1 g. of titanium tri-n-butoxymonochloride and 4.9 g. of n-butanol was stirred at 140°C for 4 hours to form a uniform alcohol solution. The mixture was cooled to 60°C and admixed with benzene to form a uniform solution, and then, 87.4 g. of ethylaluminum sesquichloride was added dropwise at 60°C and the mixture was stirred at 65°C for 1 hour. The resulting precipitate was washed with n-hexane and dried to obtain a solid powder.

Into a 2 liter autoclave, 1000 ml. of n-hexane was charged and 5 mg. of the solid powder was charged. The autoclave was heated at 90°C and hydrogen was fed under a pressure of 1.5 kg./cm$^2$ and triethylaluminum and diethylaluminum chloride in the amounts shown in Table 3 were charged with ethylene to give a total pressure of 5 kg./cm$^2$. Ethylene was absorbed by the feeding and ethylene was continuously fed to maintain the total pressure of 5 kg./cm$^2$. After 1 hour, ethanol was fed to stop the polymerization. The results are shown in Table 3.

Examples 25 and 26
References 9 and 10

A reaction of 5.0 g. of magnesium diethoxide with 86 g. of titanium tetrachloride was carried out at 130°C for 2 hours. The solid product was washed with n-hexane and dried to obtain a solid powder.

Into a 2 liter autoclave, 1000 ml. of n-hexane was charged and 5 mg. of the solid powder was charged. The autoclave was heated at 90°C and hydrogen was fed under a pressure of 1.5 kg./cm$^2$ and triethylaluminum and ethylaluminum dichloride in the amounts shown in Table 3 were charged and ethylene was fed to give a total pressure of 5 kg./cm$^2$. Ethylene was continuously fed to maintain the total pressure of 5 kg./cm$^2$. After 1 hour, the polymerization was stopped by charging ethanol. The results are shown in Table 3.

References 11 to 14

In accordance with the process of Examples 21 to 24 and References 8 and 9, except using 20 mg. of an activated $TiCl_3 \cdot 1/3\ AlCl_3$ powder instead of 5 mg. of the solid powder, each polymerization of ethylene was carried out. The results are shown in Table 3.

TABLE 3

| | Alkylaluminum compound | | | Polymerization activity K*3 | MI (g./10 min) *4 | Yield of polymer (g) |
|---|---|---|---|---|---|---|
| | TEA*1 | DEAC*2 or EADC | Cl/Al molar ratio | | | |
| Exp. 21 | 0.070 | 0.010 | 1/8 | 28,300 | 0.27 | 382 |
| Exp. 22 | 0.040 | 0.040 | 1/2 | 30,100 | 0.27 | 406 |
| Exp. 23 | 0.020 | 0.060 | 3/4 | 39,800 | 0.25 | 537 |
| Exp. 24 | 0.010 | 0.070 | 7/8 | 26,600 | 0.20 | 359 |
| Ref. 7 | 0.080 | 0 | 0 | 20,800 | 0.27 | 281 |
| Ref. 8 | 0 | 0.080 | 1 | 6,210 | 0.18 | 84 |
| Exp. 25 | 0.070 | 0.010 | 1/4 | 10,300 | 0.28 | 139 |
| Exp. 26 | 0.050 | 0.030 | 3/4 | 9,210 | 0.26 | 124 |
| Ref. 9 | 0.080 | 0 | 0 | 6,030 | 0.29 | 81 |
| Ref. 10 | 0 | 0.080 | 2 | 1,510 | 0.20 | 20 |
| Ref. 11 | 0.20 | 0.10 | 1/3 | 2,110 | 0.13 | 114 |
| Ref. 12 | 0.08 | 0.24 | 3/4 | 1,040 | 0.11 | 56 |
| Ref. 13 | 0.30 | 0 | 0 | 3,250 | 0.15 | 175 |
| Ref. 14 | 0 | 0.30 | 1 | 980 | 0.10 | 53 |

Note: *1 TEA : triethylaluminum
*2 DEAC : diethylaluminum chloride
EADC : ethylaluminum dichloride
*3 K : g polymer/(g.Ti-containing solid)×(hr)×(kg/cm² ethylene pressure)
*4 MI : melt index measured by ASTM D-1238-57T at 190°C.

**Claims**

1. A process for producing a polyolefin which comprises polymerizing ethylene or copolymerizing ethylene and other α-olefin at 50 to 100°C in a hydrocarbon solvent in the presence of a catalyst system comprising an organoaluminum compound and a transition metal compound, the total polymer finally obtained having a melt index of less than 0.5 g/10 min. characterized in that (a) the transition metal compound is a solid reaction product obtained by adding ethylaluminum sesquichloride to an inert hydrocarbon solution containing a compound represented by the formula:

$$Mg(OR^1)_mX^1_{2-m}$$

wherein $R^1$ represents an alkyl, aryl or cycloalkyl group; $X^1$ represents a halogen atom and m is 1 or 2 and titanium tri-n-butoxymonochloride to react them; (b) the polymerization reaction is carried out in two steps i.e. first and second polymerization steps and the polymerization in the second polymerization step is conducted in the presence of a reaction mixture obtained by the first polymerization step; (c) in one of the first and second polymerization steps, the polymerization is conducted in the presence of hydrogen at a molar ratio of $H_2$ to $C_2H_4$ (vapor phase) of 0.01—0.8 to produce a polymer A having a viscosity average molecular weight of $2\times10^5$—$7\times10^5$ at a ratio of 30 to 70 wt.% based on the total polymer and in the other polymerization step, the polymerization is conducted in the presence of hydrogen at a molar ratio of $H_2$ to $C_2H_4$ (vapor phase) of 1.5—15 to produce a polymer B having a viscosity average molecular weight of $1\times10^4$—$4\times10^4$ at a ratio of 70 to 30 wt.% based on the total polymer to give a ratio of a viscosity average molecular weight of polymer A to a viscosity average molecular weight of polymer B of 15 to 55; (d) said

polymer A is a copolymer of ethylene and other α-olefin and said polymer B is a homopolymer of ethylene or a copolymer of ethylene and other α-olefin.

2. The process for producing a polyolefin according to Claim 1 wherein said organoaluminum compound is an alkylaluminum chloride.

3. The process for producing a polyolefin according to Claim 1 wherein said organoaluminum compound is a mixture of an alkylaluminum chloride and a trialkylaluminum.

4. The process for producing a polyolefin according to Claim 3 wherein said mixture of an alkylaluminum chloride and a trialkylaluminum is formed to give an atomic ratio of Cl to Al of 0.1 to 1.5.

**Patentansprüche**

1. Verfahren zur Herstellung eines Polyolefins, umfassend die Polymerisation von Äthylen oder Copolymerisation von Äthylen und einem anderen α-Olefin bei 50 bis 100°C in einem Kohlenwasserstofflösungsmittel in Gegenwart eines Katalysatorsystems, umfassend eine Organoaluminiumverbindung und eine Übergangsmetallverbindung, wobei das Gesamt-Polymere, das schließlich erhalten wird, einen Schmelzindex von weniger als 0,5 g/10 min. aufweist, dadurch gekennzeichnet, daß (a) die Übergangsmetallverbindung ein festes Reaktionsprodukt ist, erhalten durch Zugabe von Äthylaluminiumsesquichlorid zu einer inerten Kohlenwasserstofflösung, enthaltend eine Verbindung der Formel

$$Mg(OR^1)_mX^1_{2-m}$$

wobei $R^1$ eine Alkyl-, Aryl- oder Cycloalkylgruppe bedeutet; $X^1$ ein Halogenatom bedeutet und m für 1 oder 2 steht, und Titantri-n-butoxymonochlorid, um sie miteinander umzusetzen; (b) die Polymerisationsreaktion in zwei Stufen durchgeführt wird, d.h. ersten und zweiten Polymerisationsstufen und die Polymerisation in der zweiten Polymerisationsstufe durchgeführt wird in Gegenwart einer Reaktionsmischung, welche in der ersten Polymerisationsstufe erhalten wurde; (c) in einer der ersten und zweiten Polymerisationsstufen die Polymerisation durchgeführt wird in Gegenwart von Wasserstoff bei einem Molverhältnis von $H_2$ zu $C_2H_4$ (Dampfphase) von 0,01 bis 0,8 zur Herstellung eines Polymeren A, welches ein Viskositäts-Durchschnittsmolekulargewicht von $2\times10^5$—$7\times10^5$ bei einem Verhältnis von 30 bis 70 Gew.-%, bezogen auf das Gesamtpolymere aufweist und in der anderen Polymerisationsstufe die Polymerisation durchgeführt wird in Gegenwart von Wasserstoff bei einem Molverhältnis von $H_2$ zu $C_2H_4$ (Dampfphase) von 1,5—15 zur Herstellung eines Polymeren B, welches ein Viskositäts-Durchschnittsmolekulargewicht von $1\times10^4$—$4\times10^4$ bei einem Verhältnis von 70 bis 30 Gew.-%, bezogen auf das Gesamtpolymere aufweist, um ein Verhältnis eines Viskositäts-Durchschnittsmolekulargewichts des Polymeren A zu einem Viskositäts-Durchschnittsmolekulargewicht des Polymeren B von 15 bis 55 zu schaffen; (d) wobei das Polymere A ein Copolymeres von Äthylen und anderem α-Olefin ist und das Polymere B ein Homopolymeres von Äthylen oder ein Copolymeres von Äthylen und anderem α-Olefin ist.

2. Verfahren zur Herstellung eines Polyolefins gemäß Anspruch 1, wobei die Organoaluminiumverbindung ein Alkylaluminiumchlorid ist.

3. Verfahren zur Herstellung eines Polyolefins gemäß Anspruch 1, wobei die Organoaluminiumverbindung eine Mischung aus einem Alkylaluminiumchlorid und einem Trialkylaluminium ist.

4. Verfahren zur Herstellung eines Polyolefins gemäß Anspruch 3, wobei die Mischung aus einem Alkylaluminiumchlorid und einem Trialkylaluminium gebildet wird unter Schaffung eines Atomverhältnisses von Cl zu Al von 0,1 bis 1,5.

**Revendications**

1. Procédé de fabrication d'une polyoléfine, consistant à polymériser de l'éthylène ou à copolymériser de l'éthylène et une autre α-oléfine, à une température de 50 à 100°C, dans un solvant hydrocarboné, en présence d'un système catalyseur comprenant un composé organoaluminique et un composé de métal de transition, le polymère total finalement obtenu présentant un indice de fusion de moins de 0,5 g/10 mn, caractérisé par le fait que: (a) le composé du métal de transition est un produit de réaction solide obtenu par addition de sesquichlorure d'éthylaluminium à une solution d'hydrocarbure inerte contenant un composé représenté par la formule:

$$Mg(OR^1)_mX^1_{2-m}$$

formule dans laquelle:

— $R^1$ représente un groupe alkyle, aryle ou cycloalkyle;
— $X^1$ représente un atome d'halogène; et
— m vaut 1 ou 2,

et du tri-n-butoxymonochlorure de titane, pour les faire réagir; (b) la réaction de polymérisation est effectuée en deux étapes, à savoir les première et seconde étapes de polymérisation, et la polymérisation

de la seconde étape de polymérisation est effectuée en présence d'un mélange réactionnel obtenu par la première étape de polymérisation; (c) dans l'une des première et seconde étapes de polymérisation, la polymérisation est effectuée en présence d'hydrogène, avec un rapport molaire de $H_2$ à $C_2H_4$ (phase vapeur) de 0,01—0,8, pour obtenir un polymère A présentant un poids moléculaire moyen de viscosité de $2\times10^5$—$7\times10^5$, à un taux de 30 à 70 % en poids sur la base du polymère total, et, dans l'autre étape de polymérisation, la polymérisation est effectuée en présence d'hydrogène, avec un rapport molaire de $H_2$ à $C_2H_4$ (phase vapeur) de 1,5—15, pour obtenir un polymère B présentant un poids moléculaire moyen de viscosité de $1\times10^4$—$4\times10^4$, à un taux de 70 à 30 % en poids sur la base du polymère total, pour obtenir un rapport du poids moléculaire moyen de viscosité du polymère A au poids moléculaire moyen de viscosité du polymère B de 15 à 55; (d) ledit polymère A est un copolymère de l'éthylène et d'une autre α-oléfine et ledit polymère B est un homopolymère d'éthylène ou un copolymère de l'éthylène et d'une autre α-oléfine.

2. Procédé de fabrication d'une polyoléfine selon la revendication 1, dans lequel ledit composé organoaluminique est un chlorure d'alkylaluminium.

3. Procéde de fabrication d'une polyoléfine selon la revendication 1, dans lequel ledit composé organoaluminique est un mélange d'un chlorure d'alkylaluminium et d'un trialkylaluminium.

4. Procédé de fabrication d'une polyoléfine selon la revendication 3, dans lequel ledit mélange d'une chlorure d'alkylaluminium et d'un trialkylaluminium est formé, pour donner un rapport atomique de Cl à Al de 0,1 à 1,5.